Europäisches Patentamt

(19) European Patent Office

Office européen des brevets

(11) EP 0 869 637 A2

(12) EUROPEAN PATENT APPLICATION

(43) Date of publication:
07.10.1998 Bulletin 1998/41

(51) Int. Cl.$^6$: H04L 9/32

(21) Application number: 98105970.2

(22) Date of filing: 01.04.1998

(84) Designated Contracting States:
AT BE CH CY DE DK ES FI FR GB GR IE IT LI LU
MC NL PT SE
Designated Extension States:
AL LT LV MK RO SI

(30) Priority: 02.04.1997 US 825876

(71) Applicant: Arcanvs
Kaysville, Utah 84037 (US)

(72) Inventors:
• Zubeldia, Pedro
Kaysville, Utah 84037 (US)
• Romney, Gordon
Salt Lake City, Utah 84124 (US)

(74) Representative:
Goddar, Heinz J., Dr.
FORRESTER & BOEHMERT
Franz-Joseph-Strasse 38
80801 München (DE)

(54) Digital certification system

(57) The present invention provides a digital certification system which allows a user to add information to a digital certificate without requiring the re-issuance of the digital certificate and the invalidating of all distributed copies of the previous certificate. The invention comprises a digital certificate and the associated computer system and procedure which support its usage. The certificate of the present invention is split into two components. One component (the "certificate index") is distributed to the user and the public. The other component (the "certificate information") is maintained by the certification authority in a publicly available trusted repository. In one embodiment, a certification authority generates a unique user ID for an applicant for a digital certificate. The certification authority then issues a digital certificate index containing the unique user ID, the user's public key, and the user's name. Unlike in the prior art, in the present invention, additional certificate information (such as, for example, the user's E-mail address) is excluded from the digital certificate index. Instead, such additional certificate information is maintained by a certification authority in a publicly available trusted repository. The location of the additional information is indicated by the unique ID. Instead of linking a public key, a user name, and the additional information, the digital certificate of the present invention links a public key with an unchanging user ID, which indicates where the additional certificate information may be found. The present invention thus allows a certification authority to change the additional certificate information at the request of the user without requiring issuance of a new certificate.

FIG. 1

EP 0 869 637 A2

**Description**

BACKGROUND OF THE INVENTION

1. FIELD OF THE INVENTION

This invention relates to the field of public key cryptography systems, and in particular, to a digital certification system.

2. BACKGROUND ART

Electronic, computer based methods of doing business are increasingly displacing traditional paper based methods. Electronic communications and electronic documents are replacing written contracts, orders, payment instruments, account statements, invoices, and other paper documents.

Unlike their paper counterparts, electronic documents do not exist in physical form. Instead, they consist of sets of digital data that may be stored on various types of digital storage media ranging from volatile internal RAM memory to non-volatile ROM memory to magnetic and/or optical disk storage media, and that may be transmitted over various computer communications links including local and wide area networks, and the Internet. Because electronic documents do not have a physical form, the mechanisms devised to create legally binding paper instruments, such as affixing a notarized signature, cannot be used for electronic documents. Accordingly, a need has arisen for alternative mechanisms for creating and authenticating legally binding electronic documents and communications. Digital encryption, digital message digests, digital signatures, and digital certificates are some of the existing cryptographic tools that are being used in the present invention to address this need.

Two well known types of cryptography are secret key cryptography and public key cryptography.

Secret key cryptography is a symmetric form of cryptography in which a single key is used to encrypt and decrypt an electronic document. To encrypt an electronic document, the electronic document and the secret key are supplied to a hardware device or a software encryption program that transforms the electronic document into an encrypted electronic document by means of an encryption process that uses the secret key and the electronic document as an input. The original electronic document can only be obtained from the encrypted electronic document by applying a reverse decryption process using the same secret key. Because the same secret key is used for encryption and decryption, both the sender and the recipient of the encrypted electronic document must have a copy of the secret key. The security of secret key cryptography can therefore be compromised by either the sender or the recipient.

Public key cryptography is an asymmetric form of cryptography that uses a two-key pair, typically referred to as a public key and a private key. These two keys are different but constitute a matched pair. In public key cryptography, electronic documents encrypted with either the public or private key of a public-private key pair can only be decrypted using the other key of the key pair. For example, an electronic document encrypted with a public key can only be decrypted using the corresponding private key. Conversely, an electronic document encrypted with a private key can only be decrypted using the corresponding public key.

The terms "public" key and "private" key stem from a manner in which public key cryptography is often used. A party A, concerned about privacy of its incoming communications, generates a public-private key pair, using cryptographic hardware and/or software. Party A keeps its private key secret, but freely distributes its public key. Party B, wishing to send a confidential electronic document to party A, can encrypt its electronic document using party A"s freely available public key. Since the electronic document can then only be decrypted using the corresponding private key, party B can be assured that only party A, in possession of the private key, will be able to decode the encrypted electronic document.

A number of uncertainties arise with respect to the use of public key cryptography. One uncertainty relates to the identity of the owner of the private key that corresponds to the public key. It is possible, for example, that a public key may be circulated that fraudulently purports to be the public key of party A, but the corresponding private key of which is actually held by party C. A sender who encrypts a confidential communication to party A, using the public key the sender believes belongs to party A, will instead be creating a confidential communication that can be decrypted and read only by party C.

A second uncertainty, from the perspective of the recipient, relates to the identity of the sender of an encrypted communication. Since the recipient's public key is freely distributed, encryption of a communication with the recipient's correct public key does not provide any information concerning the sender, other than that the sender is someone who has access to the recipient's public key. As public keys are often freely available from public key repositories, the sender could be anyone.

A third uncertainty concerns the integrity of the communication - that is, there is an uncertainty as to whether the communication received by the recipient is the actual communication sent by the sender. For example, the communication may have been intercepted, modified, or replaced.

Digital signatures and digital certificates have been devised to address some of the uncertainties inherent in public key cryptography.

One of the purposes of a digital signature is to link an electronic document with an owner of the private key corresponding to a particular public key. Additionally, a digital signature can be used to determine whether an electronic document has been altered during transmission of the document from the sender to the recipient.

One form of digital signature uses a message digest. A message digest is a value that is generated when an electronic document is passed through a one way encryption process ("digesting process") such as a hashing routine. An ideal digesting process is one for which the probability that two different electronic documents will generate the same message digest is near zero. In this form of digital signature, both the sender and the recipient need to know which digesting process is being used. The sender generates the electronic document, and generates a message digest by passing the electronic document through the digesting process. The sender encrypts the resulting message digest with the sender's private key. The result, the encrypted message digest, then becomes the digital signature of the electronic document. The digital signature may be appended to the electronic document or kept as a separate entity.

The recipient obtains the electronic document and the digital signature of the sender. The recipient decrypts the digital signature using what the recipient believes to be the sender's public key, obtaining the decrypted message digest X. The recipient processes the received electronic document using the digesting process, obtaining message digest Y. The recipient then compares message digest Y to message digest X. If $X = Y$, the message digests are the same. This verifies that the electronic document was (1) digitally signed by the private key corresponding to the public key used to recover message digest X, and (2) that the electronic document content was not changed from the time that it was signed to the time that the digital signature was verified. However, the uncertainty remains as to whether the public key used by the recipient to decrypt the digital signature, which the recipient believes is the public key of the sender, is in fact the sender's public key.

The effectiveness of the digital signature, as other uses of public key cryptography, thus depends on the level of confidence as to the identity of the holder of the private key corresponding to a particular public key.

Digital certificates are intended to provide a level of assurance as to the identity of the holder of the private key corresponding to a particular public key. The issuers of digital certificates are called certification authorities. A digital certificate constitutes a certification by a certification authority that a particular public key is the public key of a particular entity, and that this entity is the holder of the corresponding private key.

Certification authorities are often commercial enterprises that collect fees for issuing digital certificates. To obtain a digital certificate, an applicant submits an application for a digital certificate together with the applicant's public key and some form of identity verification to a certification authority. The certification authority reviews the application, and if the application meets the criteria established by the certification authority, issues a digital certificate to the applicant.

The digital certificate itself is an electronic document. Although a variety of formats exist, a digital certificate typically includes, among other items, the name of the certification authority, the name of the certificate holder, the expiration date of the certificate, the public key of the certificate holder, and the digital signature of the certification authority. The digital certificate constitutes a certification by the certification authority that the holder of the certificate is the owner of the public key specified in the certificate, and, by implication, is therefore the holder of the corresponding private key.

The authenticity of a digital certificate is tested by verifying the certification authority's digital signature using the certification authority's public key. The level of assurance provided by a digital certificate depends on a number of factors, including the reputation of the certification authority issuing the certificate, the thoroughness of the procedures used by the certification authority in issuing the certificate, and the level of confidence in the certification authority's public key. Some certification authorities issue different levels of certificates, corresponding to different levels of investigation performed by the certification authority during evaluation of an application.

The authenticity of a digital signature depends largely on the authenticity of the public key used by a recipient to test the digital signature. A digital certificate may be used to help authenticate a digital signature by verifying the authenticity of the certificate holder's public key. The digital certificate may be appended to an electronic document, or the recipient of an electronic document may obtain a copy of the certificate from the issuing certification authority or other certificate repository.

Digital certificates may be represented according to X.509, which is an ISO (International Standards Organization) standard. Under the X.509 standard, a certification authority uses a unique name for each user and issues a digitally signed certificate containing the unique user name and public key, and all other identifying attributes associated with the user. Examples of such identifying attributes are the certification authority "Certification Practices Statement", employer name, date of birth, Social Security Number, and so forth. Version 3 of the X.509 standard allows "certificate extensions" to include user defined parameters and data.

The unique user name is commonly created using the hierarchical structure defined in the X.500 ISO standard, and is referred to as a "distinguished name".

Although not considered a digital certificate, a public key certification mechanism is used in the Pretty Good Privacy ™ ("PGP") cryptographic system.

PGP is a public key cryptographic system originally developed by Phil Zimmerman that is available in commercial and freeware versions. The commercial version of PGP is distributed by ViaCrypt. It includes utilities for generating public-private key pairs, for encrypting, for digitally signing, for decrypting electronic documents, and for verifying digital signatures.

PGP also includes utilities for managing keys. Keys are stored in files referred to as key rings. There is a public key ring containing public keys and a private key ring containing private keys. Each private key stored in the private key ring is encrypted using a symmetrical encryption key referred to as a pass phrase. The public key structure of PGP allows keys to be certified.

PGP allows a user to certify public keys contained in the user's public key ring. Typically, the public key ring contains the user's own public key, as well as public keys of other entities obtained by the user. The user may certify a public key if the user is confident as to the authenticity of the public key. The PGP certification process appends the digital signature of the certifying user to the public key being certified, along with the key ID of the person doing the certification and the certification date. PGP allows a key to be certified by more than one person. Subsequent certifications of this key by other persons are appended to the public key.

A PGP certified key is not a digital certificate. The presence of a digital signature from a Trusted Third Party, and reference to the circumstances under which the certification was issued, are necessary in a digital certificate.

Additional information about PGP and X.509 is found in "Applied Cryptography," Bruce Schneier, John Wiley & Sons, 1996, incorporated by reference herein.

To effectively use digital certificates to certify the authenticity of electronic documents, the recipient of an electronic document must be able to identify with certainty the public key that corresponds to the user name used by the sender of the electronic document.

Users occasionally want or need to change the information contained in their digital certificate. In the prior art, each digital certificate associates a public key with the user name and other user information contained therein. The entire digital certificate is digitally signed by the certification authority. A user cannot change any of the certificate information without invalidating the certificate, since any change would modify the message digest of the certificate.

Any change in the data included in the prior art digital certificate requires the certificate to be reissued, and all instances of the previous certificate to be invalidated. Such a process is highly ineffective and virtually impossible to accomplish.

Accordingly, there is a need for a means that allows more efficient and flexible digital certification.

SUMMARY OF THE INVENTION

The present invention provides a digital certification system which allows a user to add information to a digital certificate without requiring the re-issuance of the digital certificate and the invalidating of all distributed copies of the previous certificate. The invention comprises a digital certificate and the associated computer system and procedure which support its usage.

The digital certificate of the present invention is split into two components. One component (the "certificate index") is distributed to the user and the public. The other component (the "certificate information") is maintained by the certification authority in a publicly available trusted repository.

In one embodiment, a certification authority generates a unique user ID for an applicant for a digital certificate. The certification authority then issues a digital certificate containing, in the certificate index, the unique user ID, the user's public key, and the user's name. Unlike in the prior art, in the present invention, additional certificate information (such as, for example, the user's E-mail address, or biometric information) is excluded from the digital certificate index. Instead, such additional certificate information is maintained by the certification authority in a publicly available trusted repository.

Access to the additional certificate information is obtained through the unique user ID in the certificate index. Instead of linking a public key, a user name, and the additional information, the digital certificate of the present invention links a public key with an unchanging user ID, which allows access to the additional certificate information. The present invention thus allows the certification authority to change the additional certificate information at the request of the user without requiring issuance of a new certificate.

A user wishing to send an electronic document to a recipient generates the electronic document, digitally signs it with the user's private key, optionally encrypts the document with the recipient's public key, and sends the electronic document to the recipient.

The recipient of an electronic document must have access to the digital certificate associated with the key used to digitally sign the electronic document. The digital certificate may be, for example, attached to the electronic document, may be obtained from the issuing certification authority, may already be on file in the recipient's computer system, or may be obtained from a third party.

In one embodiment of the invention, the steps for validating an electronic document include: 1) Verifying that the digital certificate is properly signed by the issuing certification authority; 2) verifying that the electronic document is signed by the user described in the digital certificate; 3) verifying that the certificate is valid and has not expired or been revoked; and 4) accessing the additional certificate information linked to the digital certificate maintained in the trusted data repository.

The digital certificate of this invention may be represented in different embodiments using the X.509 standard syntax, or it may be a clear text certificate, or may use other representations, such as, for example, the PGP data structure.

The digital certificate of the invention may be used to authenticate public keys, for use in verification of digital signatures, for use in encryption, and for any other uses of public keys.

## BRIEF DESCRIPTION OF THE DRAWINGS

Figure 1 is a schematic diagram illustrating participants involved in one embodiment of the present invention.

Figure 2 shows a format of a prior art digital certificate.

Figure 3 is an example of a prior art digital certificate.

Figure 4 shows a format of a digital certificate index according to one embodiment of the present invention.

Figure 5 is an example of a digital certificate index constructed according to one embodiment of the present invention.

Figure 6 shows a format of certificate information contained in a repository according to one embodiment of the present invention.

Figure 7 is an example of certificate information contained in a repository according to one embodiment of the present invention.

Figure 8 shows a format of a digital certificate information contained in a repository according to one embodiment of the present invention.

Figure 9 is an example of a digital certificate information contained in a repository according to one embodiment of the present invention.

Figure 10 is a flowchart for applying for a digital certificate according to one embodiment of the present invention.

Figure 11 is a flowchart describing one embodiment of a validation process that uses a digital certificate of the present invention.

## DETAILED DESCRIPTION OF THE INVENTION

The present invention is a digital certification system that may be used in electronic communication and commerce. In the following description, numerous specific details are set forth to provide a more thorough description of the present invention. It will be apparent, however, to one skilled in the art, that the present invention may be practiced without these specific details. In other instances, well known features have not been described in detail so as not to obscure the present invention.

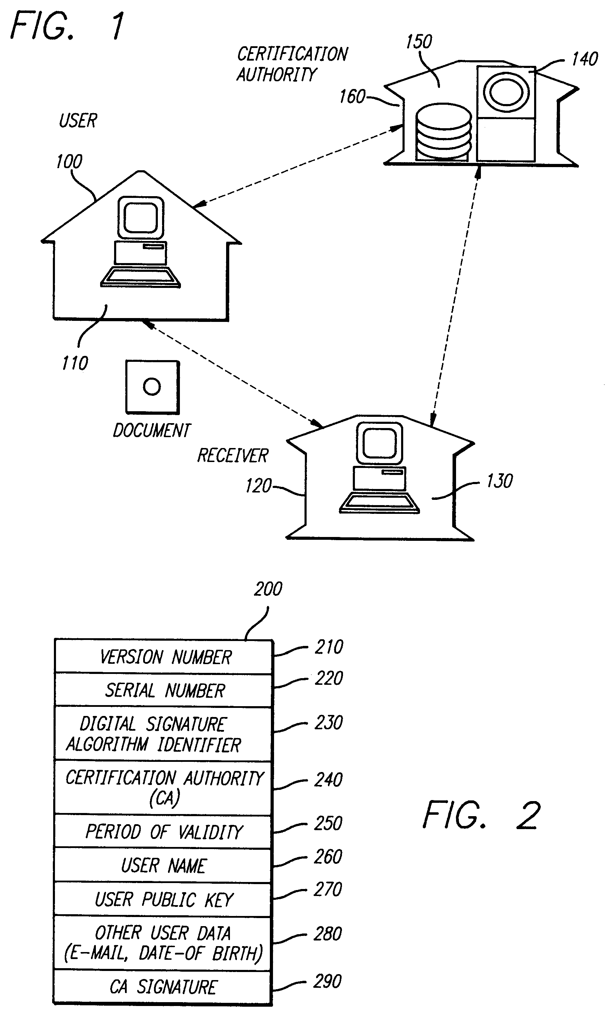

Figure 1 is a schematic diagram illustrating participants involved in one embodiment of the present invention. As shown in Figure 1, participants involved in this embodiment include an originating party or "user" 100 and a receiver 120. User 100 is the party that wishes to have its public key certified by Certification Authority 160. Certification Authority 160 is an individual or enterprise that has access to the apparatus of the present invention and that has been authorized to use the method of the present invention. In the embodiment of Figure 1, user 100 has a user computer 110, which may, for example, be a personal computer running Microsoft Windows 95™. Receiver 120 also has a receiver computer 130, which may, for example, be a personal computer running Microsoft Windows 95™. Certification Authority 160 has a repository 150 and a Certification Authority computer 140, which may, for example, be a personal computer, a workstation or a mini or main frame computer.

A digital certificate is a computer-based record containing someone's public key, signed by a trustworthy person or party. Certificates are designed and implemented to prevent attempts to substitute one key for another. When a key is digitally certified, the correspondence between the key and its owner is publicly verified.

Figure 2 shows a block diagram of an example of a prior art digital certificate. As shown in Figure 2, a digital certificate 200 includes a certificate version number 210, a serial number 220, a digital signature algorithm identifier 230, certification authority (CA) information 240, a period of validity 250, a user name 260, a user public key 270, additional user information such as the user's E-mail address, biometric information, and date of birth 280, and the CA's digital signature 290.

The serial number 220 is generated by the certification authority. In one prior art example, the certification authority generates the serial number by passing the user's public key through a message digesting (MD) algorithm. The period of validity is assigned by the certification authority, and may, for example, be a period of one year. The user name 260 is created and assigned by the user. The user name, therefore, may not be unique. The digital signature of the certification authority consists of a message digest of all the fields of the certificate encrypted using the certification authority's private key.

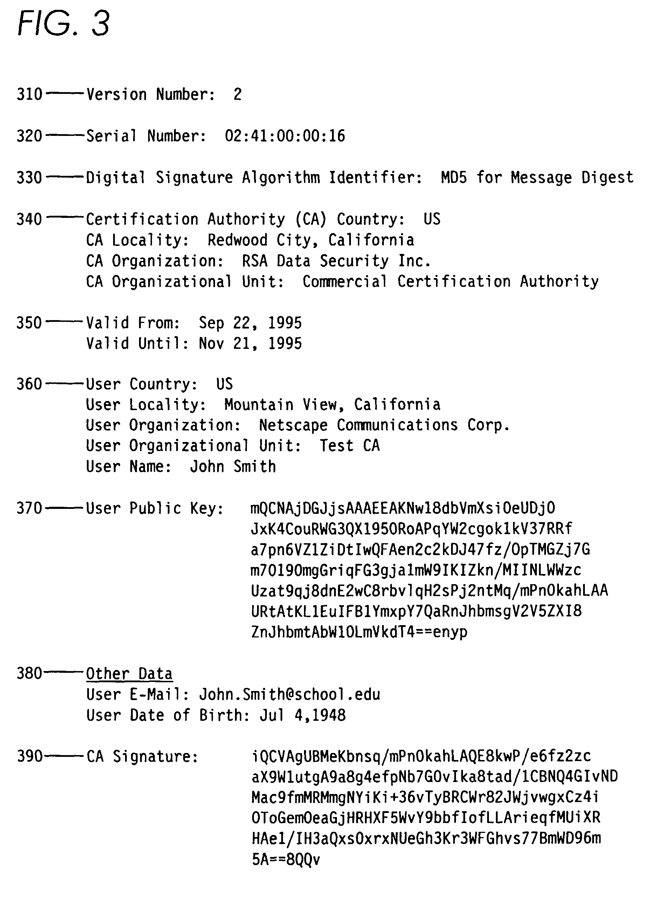

Figure 3 is an example of a prior art certificate using the structure shown in Figure 2. As shown in Figure 3, digital certificate 300 includes a version number 310, a serial number 320, a digital signature algorithm identifier 330, certification authority information 340, a validity period 350, a user name 360, a user public key 370, additional user information 380, and a CA digital signature 390. CA information 340 identifies the particular certification authority that issued the certificate. Validity period 350 indicates the period of validity for the particular certificate. User public key 370 comprises the public key of the user. User name 360 includes the user's name as well as information about the user's location and organizational affiliation.

In Figure 3, the CA's digital signature is generated using a message digest (MD) algorithm such that:

$$\text{Signature} = \text{Encrypt}_{CA\ priv.\ key}(\text{MD (Version No., Serial No.,} \tag{1}$$
$$\text{Digital Signature Algorithm Identifier, CA information, Validity period, User}$$
$$\text{name, User Public Key, Additional User Information))}$$

Any suitable message digest algorithm can be used to generate the digital signature. Some of popular MD algorithms include the MD2 and MD5 algorithms developed by Ron Rivest. A message digest algorithm essentially takes an arbitrary-length message and applies a one-way hash function to return a fixed length value. Message digest algorithms are designed so that it is easy to calculate a hash value from a given message, but it is infeasible to derive a message from a given hash value.

According to eq. (1), after a message digest is calculated based upon the version number, serial number, digital signature algorithm identifier, the CA's information, the period of validity, the user's name, the user's public key, and the additional user data, the certification authority encrypts the message digest with the certification authority's private key, generating the certification authority's digital signature. The digital signature prevents anyone from changing any of the data used to generate the signature (i.e. the serial number, issuer name, period of validity, user's name, the user's public key, or the additional user data).

Any entity that has access to the certification authority's public key can decrypt the digital signature and verify the contents of the digital certificate by comparing the message digest obtained by decrypting the digital signature with the message digest obtained by running the data contained in the certificate through the appropriate hashing function. If anyone has changed any of the information contained in the digital certificate, the message digests won't match.

The signature generated according to eq. (1) includes an association between (i) the user name and additional user information such as the user's address or E-mail address, user's biometric information, and the user's date of birth (which will be referred to in the aggregate as "user information"), and (ii) the user's public key. This association exists because when the certification authority's digital signature is generated, each of the user name, the additional user information, and the user's public key are involved. Consequently, in the prior art, when the user changes any of the user information, the existing certificate can no longer be used, because the digital signature contained in the certificate will not match the message digest obtained using the new user information. A new certificate must be issued, containing a new digital signature of the certification authority generated using the new user information.

Accordingly, the prior art digital certificate system is inflexible, especially when the user wishes to change any of the user information associated with the public key validated by the certificate. As can be seen from eq. (1), in the prior art, the certification authority's digital signature authenticating the certificate is obtained by applying an MD algorithm to data that includes all of the user information and the user's public key. Thus, when user information is changed, the existing certificate is no longer valid since the current signature is valid only for the old user information. Consequently, a new certificate has to be generated that contains the new user information.

Thus, the prior art method becomes inefficient and inflexible due to the need to create new certificates and remove old certificates when there are changes in user information. A user may desire to change the user information relatively frequently, for example, due to a change in Internet service provider, a change in job, or a change in marital status, etc. Requiring re-certification because of such user information changes is inconvenient and inefficient.

The certificate of the present invention is split into two components. One component (the "certificate index") is distributed to the user and the public. The other component (the "certificate information") is maintained by the certification authority in a publicly available trusted repository.

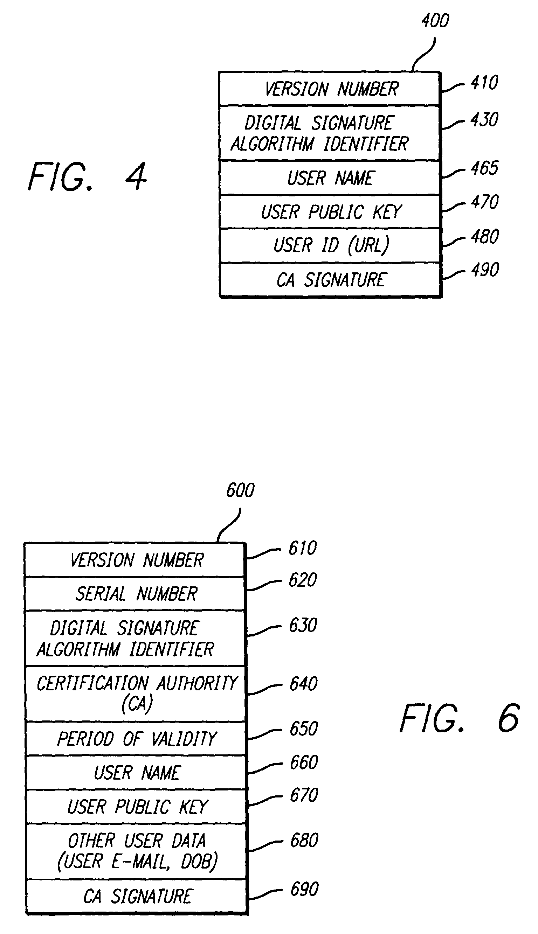

Figure 4 is a schematic diagram illustrating the format of a digital certificate index according to one embodiment of the present invention. As shown in Figure 4, digital certificate index 400 does not contain user information other than the user name. Instead, in addition to the version number 410, digital signature algorithm identifier 430, user name 465, and user public key 470, digital certificate index 400 also includes a unique user ID 480. The unique user ID 480 is assigned to a user by a certification authority and contains a user identification code that is selected to have a high degree of uniqueness.

The unique user ID may contain any alphanumeric code as generated by the certification authority, but preferably excludes data that might be subject to change. The unique user ID is designed to positively identify the subject over the life of the certificate regardless of changes to the user information. In one embodiment, for example, the unique user ID comprises the URL (Uniform Resource Locator) in an Internet server computer maintained by the certification authority that contains a copy of the digital certificate information. In this case the unique user ID not only uniquely identifies the user, but also identifies the Internet location at which an original copy of the digital certificate information can be found. The unique user ID acts as a pointer to a repository containing the additional certificate information.

Instead of creating an association between a user's public key and user information that is subject to change, the present invention creates a new association between the user's public key and an unchanging unique user ID. Changeable user information, instead of being included in the certificate index, is maintained at a location indicated by the unique user ID.

The digital certificate index of Figure 4, unlike prior art certificates, also does not include a period of validity. Because this information, like the additional user information, is subject to change, it is not contained in the certificate index, but is stored in the repository together with the additional user information.

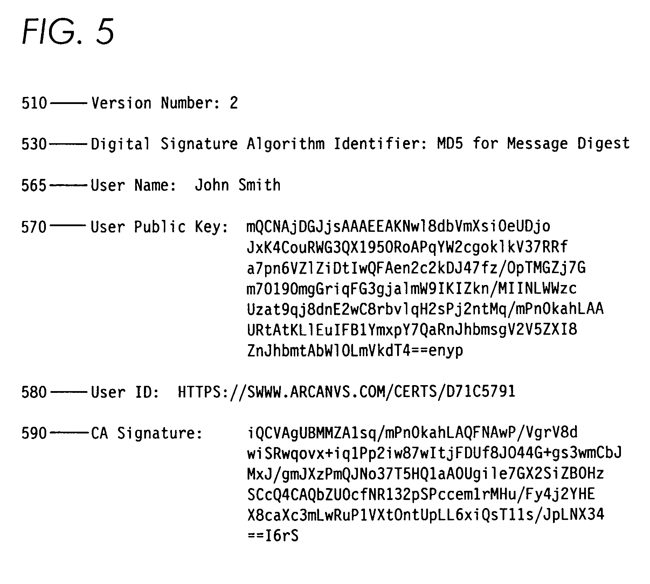

Figure 5 is an example of a digital certificate index constructed according to the present invention using the format of Figure 4. As shown in Figure 5, digital certificate index 500 includes a version number 510, a digital signature algorithm identifier 530, a user name 565, a user's public key 570, a unique user ID 580 assigned to the applicant by the certification authority, and the CA's digital signature 590 of the certificate index. In this particular example, the user ID "HTTPS: / /SWWW.ARCANVS.COM/CERTS/D71C5791" has been created and assigned to the applicant by the certification authority.

According to one embodiment of the present invention, the certification authority's digital signature 590 of digital certificate index 500 is generated as follows:

$$\text{Signature} = \text{Encrypt}_{\text{CA priv. key}}(\text{MD (Version No.,Digital Signature Algorithm Identifier, User Name, User Public Key, User ID))} \tag{2}$$

According to eq. (2), the certification authority's signature 590 is generated by first generating a message digest based on the Version number 510, Digital Signature Algorithm Identifier 530, User Name 565, User Public Key 570, and User ID 580. Any suitable message digest algorithm can be used. The certification authority's digital signature is completed by encrypting the message digest with the certification authority's private key.

It will be appreciated by one skilled in the art that any suitable encryption algorithm can be used in conjunction with the present invention to generate a digital signature and verify it, such as, for example, PGP from ViaCrypt. As shown in Figure 5, a certificate may also have a separate "Algorithm" field such as field 530 to identify the algorithm that is used to generate the certification authority's digital signature.

The digital signature according to eq. (2) does not include the prior art's association between the subject's public key and changeable user information and eliminates the need to generate a new certificate every time there is a change in user information. Accordingly, when the user changes any of the user information (except for the user name) the validity of the certificate index is not affected because such information is not included in the certificate index and is not involved in generating the certification authority digital signature of the certificate index. The digital signature, and therefore the certificate index, remains valid as long as the contributing variables such as the user's public key and the unique user ID assigned by the certification authority remain the same. This flexibility of the present invention allows the users to make changes to user information while maintaining the validity of the digital certificate. There is now no need to generate a new certificate every time there is a change to the user information. Instead, the current certificate can still be used with the updated user information.

In one embodiment of the present invention, digital certificates are maintained in a certificate repository. A certificate repository is a system that stores and retrieves digital certificates and other information that is relevant to digital signatures. The database in the certificate repository is maintained by a system that guarantees secure storage. In one embodiment, the unique user IDs assigned by a certification authority represent URLs in one or more Internet server computers maintained by the certification authority, and each certificate is stored at an Internet location that corresponds to the URL represented by the unique user ID of that certificate.

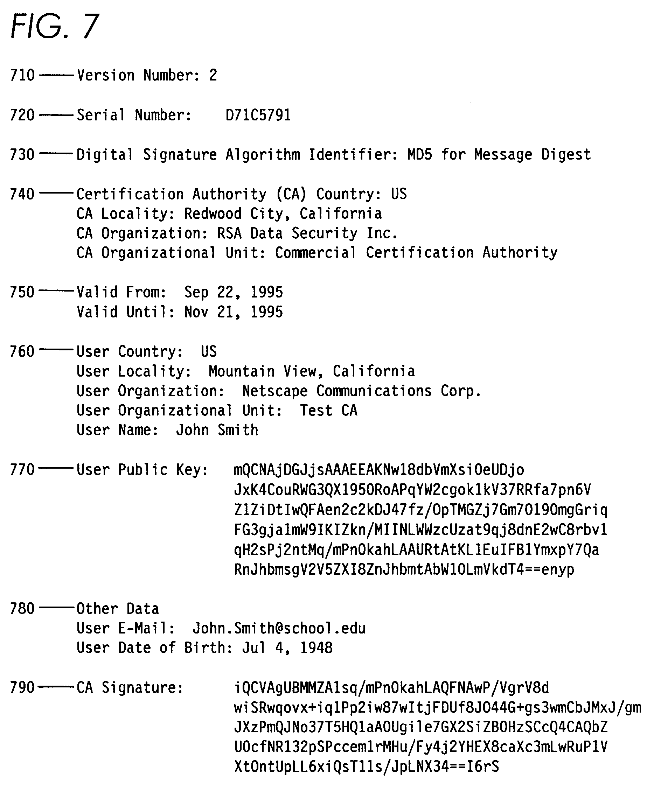

Figure 6 shows a format of certificate information contained in a repository according to one embodiment of the present invention. The certificate information 600 includes a version number 610, a serial number 620, a digital signature algorithm identifier 630, certification authority (CA) information 640, a period of validity 650, a user name 660, a user's public key 670, other user data such as the user's E-mail address and date of birth 680, and a CA's digital signature of the certificate information 690. Thus, certificate information 600 can be used to provide information that is not available from certificate index 500. For example, information about the period of validity, CA information, and the user's E-mail address, if not included in the user's digital certificate, can be obtained from certificate information 600.

Figure 7 is an example of certificate information contained in a repository according to the embodiment of Figure 6. As shown in Figure 7, the user information includes a version number 710, a serial number 720, a digital signature algorithm identifier 730, certification authority (CA) information 740, a period of validity 750, a user name 760, a user's public key 770, other user data 780, and a CA's digital signature 790 of the certificate information. Certification authority (CA) information 740 includes the location and name of a CA organization, and its organizational unit. For this particular embodiment, user name 760 includes a user name, the user's country and location, the user's organization name, and the user's organizational unit. In other data field 780, a user's E-mail address and date of birth are included.

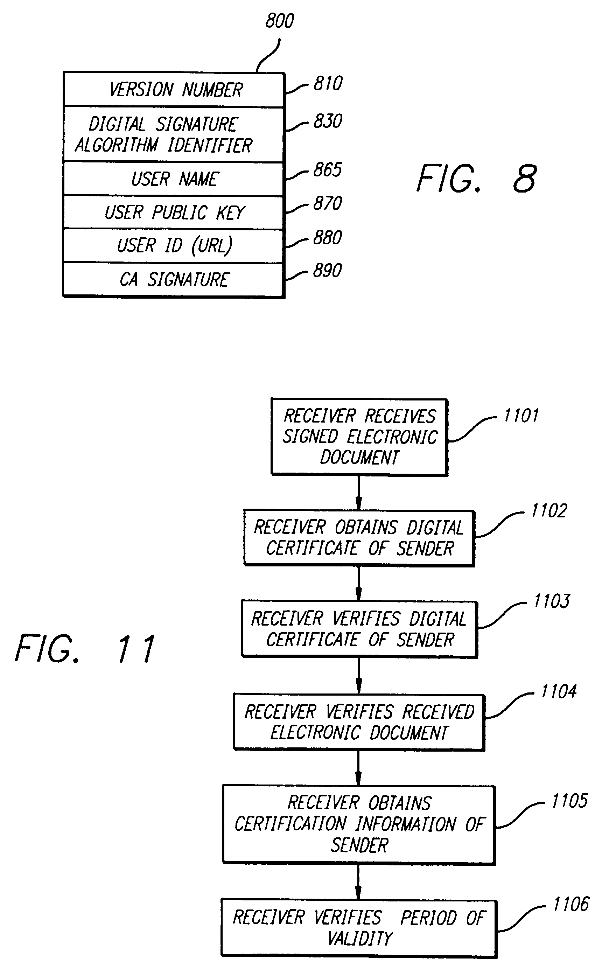

Figure 8 shows a format of a digital certificate index contained in a repository according to one embodiment of the present invention. The format shown in Figure 8 is the same as that of the digital certificate index of Figure 4. As shown in Figure 8, digital certificate index 800 includes a version number 810, a digital signature algorithm identifier 830, a user name 865, a user public key 870, a unique user ID 880, and a CA's digital signature 890 of the digital certificate index.

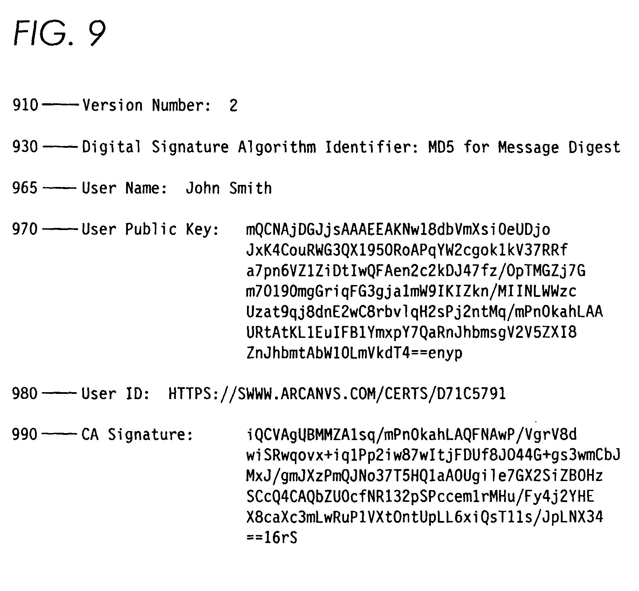

Figure 9 is an example of a digital certificate index contained in a repository according to the embodiment of Figure 8. As shown in Figure 9, the digital certificate index includes a version number 910, a digital signature algorithm identifier 930, a user name 965, a user's public key 970, a unique user ID 980, and a CA's digital signature 990 of the digital certificate index.

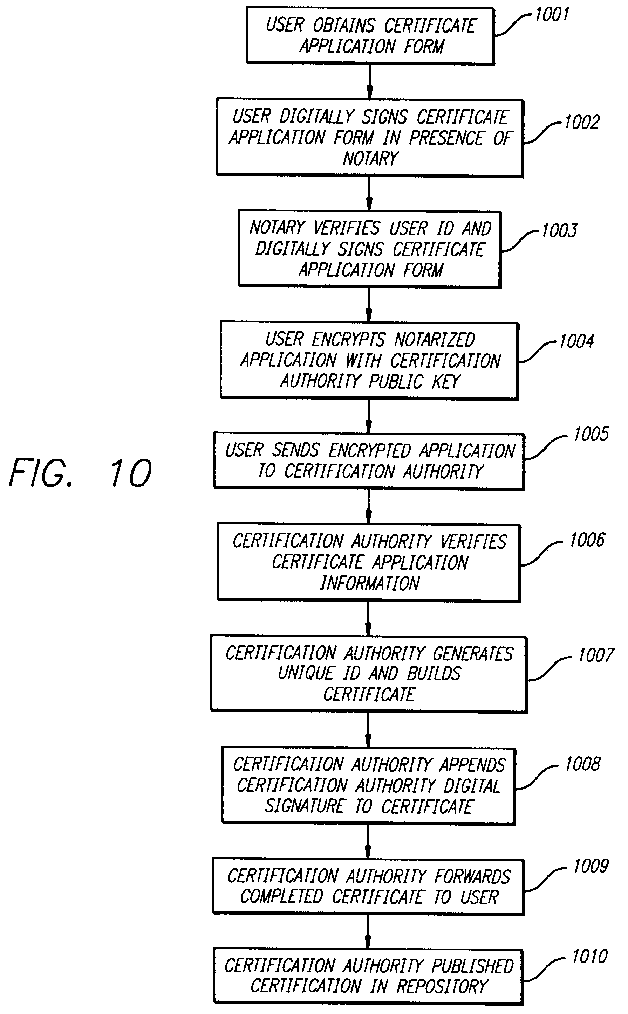

Figure 10 shows a flowchart for applying for a digital certificate according to one embodiment of the present invention. The particular embodiment of Figure 10 can be used with any appropriate cryptographic system, including, for example, PGP. Referring to Figure 10, in step 1001, an applicant obtains a certificate application form from a certification authority, for example by using an FTP download or an E-mail request, and completes the application form by supplying the information specified in the form. In one embodiment, this information includes the applicant's public key as well as identifying information about the applicant.

In one embodiment, the completed certificate application must be verified by a publicly trusted party such as a notary. In this embodiment, in step 1002, the applicant appears before a notary approved by a certification authority and signs the application form with the applicant's private key in the presence of the notary. In step 1003, the notary verifies the applicant's identity, notarizes the application, and digitally signs the notarized application. One process that may be used by the notary to notarize the application is described in co-pending application serial no. 08/800,560 entitled "Method and Apparatus for Authenticating Electronic Documents," assigned to the assignee of the present invention and incorporated by reference herein. In an alternate embodiment of the present invention, the notarization is not a requirement for a certificate application, and steps 1002-1003 may be omitted. The applicant encrypts the notarized application at block 1004, and sends the encrypted application to the certification authority at block 1005. In an alternate embodiment, steps 1004 and 1005 are performed by the notary instead of the applicant. In an alternate embodiment, step 1004 may be omitted.

The certification authority verifies the information contained in the certificate application in step 1006. In step 1007, the certification authority generates a unique user ID and builds a certificate. The certification authority appends a certification authority digital signature to the certificate index and to the certificate information in step 1008 as described with respect to Figures 4 and 5, and forwards the certificate index to the applicant in step 1009. In step 1010, the certification authority posts the certificate index and the certificate information in the certification authority's certificate repository.

Figure 11 is a flowchart describing one embodiment of a digital signature validation process that uses a digital certificate of the present invention. Referring to Figures 1 and 11, in step 1101, a receiver such as receiver 120 of Figure 1 receives a digitally signed electronic document from a sender such as user 100 of Figure 1. In step 1101, the receiver obtains the digital certificate index associated with the sender to validate the electronic document. The digital certificate index may be attached to the electronic document, may be obtained from CA repository 150, may already be on file in receiver computer 130, or may be obtained from a third party.

In step 1103, the receiver verifies the authenticity of the digital certificate index obtained in step 1102 by checking the digital signature of the issuing CA on the digital certificate. For example, if the digital certificate index has a form shown in Figure 9, the receiver decrypts CA's digital signature 990 using the CA's public key (to which the receiver has access), and obtains a first, decrypted message digest. The receiver uses the algorithm identified in algorithm identifier 930 to obtain a second message digest by applying the message digest algorithm to version number 910, digital algorithm identifier 930, user name 965, user's public key 970 and user ID 980. The receiver then compares the two message digests. If they match, the receiver is assured of the authenticity of the digital certificate index and its content including the authenticity of the sender's public key.

After verifying the digital certificate in step 1103, the receiver verifies the authenticity of the electronic document in step 1104. For example, the receiver uses the sender's public key as obtained from user public key 970 of the digital certificate index in Figure 9 to decrypt the sender's digital signature for the received electronic document. The receiver verifies the authenticity of the decrypted sender's digital signature by, for example, generating a message digest of the received electronic document and comparing the generated message digest with the sender's decrypted digital signature.

If desired, the receiver may also obtain additional certificate information from the repository using the user ID from the digital certificate index as a pointer in step 1105. For example, the receiver may obtain a period of validity from the repository to validate the digital certificate in step 1106.

Although steps 1105 and 1106 are performed after step 1104 in Figure 11, it is also possible to perform steps 1105 and 1106 before step 1104 and anywhere after step 1102 in alternate embodiments.

Thus, a method and apparatus for implementing a digital certification system have been described. The present invention overcomes the limitations of prior art certificates by assigning a unique user ID to a user, and by dividing information related to the certificate into two sets of information. The first set of information, which comprises the user's public key and the unique user ID, are included in the digital certificate index. The second set of information is stored in a repository location identified or pointed to by a pointer, for example the unique user ID contained in the first set of information. Thus the certificate information (i.e., the second set of information) can be changed without requiring the re-issuance of a new certificate. It is understood that particular embodiments described herein are illustrative and the present invention is not limited to these particular embodiments. It will be apparent to those skilled in the art that changes can be made in the various details described herein without departing from the scope of the invention. The present invention is defined by the claims and their full scope of equivalents.

The features disclosed in the foregoing description, in the claims and/or in the accompanying drawings may, both separately and in any combination thereof, be material for realising the invention in diverse forms thereof.

## Claims

1. A digital certificate for authenticating an association between a user and a public key of said user; said digital certificate comprising a first set of data related to said digital certificate; said first set of data comprising:

   said public key of said user;
   an indicator identifying a location for obtaining a second set of data related to said digital certificate.

2. The digital certificate of claim 1 further comprising a digital signature comprising an encrypted message digest of said first set of data.

3. The digital certificate of claim 1 wherein said indicator comprises a unique user ID.

4. The digital certificate of claim 3 wherein said unique user ID comprises an Internet address.

5. The digital certificate of claim 4 wherein said Internet address comprises a URL (Uniform Resource Locator).

6. The digital certificate of claim 5 wherein said URL comprises identifying information of a digital certificate.

7. The digital certificate of claim 4 wherein said Internet address is the Internet address of a repository.

8. The digital certificate of claim 3 wherein said indicator is generated by a certificate issuer.

9. The digital certificate of claim 1 wherein said second set of data comprising a digital signature comprises an encrypted message digest of said second set of data.

10. The digital certificate of claim 9 wherein said second set of data comprises a period of validity.

11. A method for issuing a digital certificate authenticating an association between a user and a public key of said user, said method comprising the steps of:

    receiving a certificate application, said application comprising said public key of said user and information related to said user;
    generating a pointer to a storage system;
    constructing a digital certificate comprising a first set of data comprising:

    said pointer;
    said public key of said user; and
    a first portion of said information related to said user;

storing a second set of data comprising a second portion of said information related to said user in said storage system.

**12.** The method of claim 11 further comprising the steps of:

generating a message digest of said first set of data;
encrypting said message digest with a private key to generate a digital signature for said digital certificate.

**13.** The method of claim 11 further comprising the steps of:

generating a message digest of said second set of data;
encrypting said message digest with a private key to generate a digital signature for said digital certificate.

**14.** The method of claim 11 wherein said first set of data comprises a version number and a digital signature algorithm identifier.

**15.** The digital certificate of claim 11 wherein said second set of data comprises a period of validity.

**16.** The method of claim 11 in which said certificate application comprises a digital signature.

**17.** The method of claim 11 wherein said pointer comprises a unique user ID.

**18.** The method of claim 17 wherein said unique user ID comprises a URL (Uniform Resource Locator).

**19.** The method of claim 18 wherein said URL comprises identifying information of a certificate repository.

**20.** A program storage device readable by a machine, tangibly embodying a program of instructions executable by the machine to perform method steps for authenticating an association between a user and a public key, said method comprising the steps of:

receiving a certificate application from said user, said application comprising a public key of said user and user data;
verifying said user data;
generating a unique user ID pointing to a repository;
constructing a digital certificate comprising a first set of data comprising:

said unique user ID;
said public key of said user;

generating a message digest of said first set of data;
encrypting said message digest with a private key to generate a digital signature of said digital certificate;
storing a second set of data comprising a portion of said user data in

said repository.

**21.** The program storage device of claim 20 wherein said method further comprises the steps of:

generating a message digest of said second set of data;
encrypting said message digest with a private key to generate a digital signature of said second set of data.

**22.** The program storage device of claim 20 wherein said second set of data further comprises a period of validity.

**23.** The program storage device of claim 20 in which said certificate application comprises a digital signature.

**24.** The program storage device of claim 21 in which said private key is a private key of a certificate issuer.

**25.** The program storage device of claim 20 wherein said method further comprises the step of:

storing a copy of said digital certificate in said repository.

26. The program storage device of claim 20 wherein said unique user ID comprises a URL.

27. An article of manufacture comprising:

a computer usable medium having computer readable program code embodied therein for authenticating an association between a user and a public key, the computer readable program code in said article of manufacture comprising:
computer readable code configured to cause a computer to receive a certificate application, said application comprising a public key of said user and information related to said user;
computer readable code configured to cause said computer to generate a pointer to a storage system;
computer readable code configured to cause said computer to construct a digital certificate comprising a first set of data comprising:

said pointer;
said public key of said user; and
a first portion of said information related to said user;

computer readable code configured to cause said computer to store a second set of data comprising a second portion of said information related to said user in said storage system.

28. The article of manufacture of claim 27 further comprising:

computer readable code configured to cause said computer to generate a message digest of said first set of data;
computer readable code configured to cause said computer to encrypt said message digest with a private key to generate a digital signature for said digital certificate.

29. The article of manufacture of claim 27 in which said certificate application comprises a digital signature.

30. The article of manufacture of claim 27 wherein said pointer comprises a unique user ID.

31. The article of manufacture of claim 30 wherein said unique user ID comprises a URL (Uniform Resource Locator).

32. The article of manufacture of claim 27 wherein said first set of data comprises a version number and a digital signature algorithm identifier.

33. The article of manufacture of claim 27 wherein said second set of data comprises a period of validity.

34. A method for verifying the authenticity of an electronic document based on digital certification, wherein said electronic document is digitally signed by a sender and said digital certificate is issued by a certificate issuer, said method comprising the steps of:

obtaining a digital signature of said electronic document signed by said sender;
obtaining a digital certificate for said sender, wherein said digital certificate comprises a unique user ID and a public key of said user, said unique user ID uniquely identifying a location in a repository;
obtaining user information from said repository location using said unique user ID;
verifying an authenticity of said electronic document using said public key of said sender.

35. The method of claim 34 wherein said user information comprises a period of validity.

# FIG. 1

USER

CERTIFICATION
AUTHORITY

150

140

160

100

110

DOCUMENT

RECEIVER

120

130

# FIG. 2

200

| |
| --- |
| VERSION NUMBER — 210 |
| SERIAL NUMBER — 220 |
| DIGITAL SIGNATURE ALGORITHM IDENTIFIER — 230 |
| CERTIFICATION AUTHORITY (CA) — 240 |
| PERIOD OF VALIDITY — 250 |
| USER NAME — 260 |
| USER PUBLIC KEY — 270 |
| OTHER USER DATA (E-MAIL, DATE-OF BIRTH) — 280 |
| CA SIGNATURE — 290 |

# FIG. 3

310——Version Number:  2

320——Serial Number:  02:41:00:00:16

330——Digital Signature Algorithm Identifier:  MD5 for Message Digest

340——Certification Authority (CA) Country:  US
      CA Locality:  Redwood City, California
      CA Organization:  RSA Data Security Inc.
      CA Organizational Unit:  Commercial Certification Authority

350——Valid From:  Sep 22, 1995
      Valid Until: Nov 21, 1995

360——User Country:  US
      User Locality:  Mountain View, California
      User Organization:  Netscape Communications Corp.
      User Organizational Unit:  Test CA
      User Name:  John Smith

370——User Public Key:    mQCNAjDGJjsAAAEEAKNw18dbVmXsiOeUDjO
                          JxK4CouRWG3QX1950RoAPqYW2cgok1kV37RRf
                          a7pn6VZ1ZiDtIwQFAen2c2kDJ47fz/OpTMGZj7G
                          m70190mgGriqFG3gja1mW9IKIZkn/MIINLWWzc
                          Uzat9qj8dnE2wC8rbv1qH2sPj2ntMq/mPnOkahLAA
                          URtAtKL1EuIFB1YmxpY7QaRnJhbmsgV2V5ZXI8
                          ZnJhbmtAbW10LmVkdT4==enyp

380——Other Data
      User E-Mail: John.Smith@school.edu
      User Date of Birth: Jul 4,1948

390——CA Signature:      iQCVAgUBMeKbnsq/mPnOkahLAQE8kwP/e6fz2zc
                         aX9W1utgA9a8g4efpNb7GOvIka8tad/1CBNQ4GIvND
                         Mac9fmMRMmgNYiKi+36vTyBRCWr82JWjvwgxCz4i
                         OToGemOeaGjHRHXF5WvY9bbfIofLLArieqfMUiXR
                         HAe1/IH3aQxsOxrxNUeGh3Kr3WFGhvs77BmWD96m
                         5A==8QQv

## FIG. 4

400

| VERSION NUMBER | ⌐ 410 |
| DIGITAL SIGNATURE ALGORITHM IDENTIFIER | ⌐ 430 |
| USER NAME | ⌐ 465 |
| USER PUBLIC KEY | ⌐ 470 |
| USER ID (URL) | ⌐ 480 |
| CA SIGNATURE | ⌐ 490 |

600

| VERSION NUMBER | ⌐ 610 |
| SERIAL NUMBER | ⌐ 620 |
| DIGITAL SIGNATURE ALGORITHM IDENTIFIER | ⌐ 630 |
| CERTIFICATION AUTHORITY (CA) | ⌐ 640 |
| PERIOD OF VALIDITY | ⌐ 650 |
| USER NAME | ⌐ 660 |
| USER PUBLIC KEY | ⌐ 670 |
| OTHER USER DATA (USER E-MAIL, DOB) | ⌐ 680 |
| CA SIGNATURE | ⌐ 690 |

## FIG. 6

# FIG. 5

510——Version Number: 2

530——Digital Signature Algorithm Identifier: MD5 for Message Digest

565——User Name:  John Smith

570——User Public Key:  mQCNAjDGJjsAAAEEAKNwl8dbVmXsiOeUDjo
JxK4CouRWG3QX1950RoAPqYW2cgoklkV37RRf
a7pn6VZlZiDtIwQFAen2c2kDJ47fz/OpTMGZj7G
m70190mgGriqFG3gjalmW9IKIZkn/MIINLWWzc
Uzat9qj8dnE2wC8rbvlqH2sPj2ntMq/mPnOkahLAA
URtAtKLlEuIFB1YmxpY7QaRnJhbmsgV2V5ZXI8
ZnJhbmtAbWlOLmVkdT4==enyp

580——User ID:  HTTPS://SWWW.ARCANVS.COM/CERTS/D71C5791

590——CA Signature:  iQCVAgUBMMZA1sq/mPnOkahLAQFNAwP/VgrV8d
wiSRwqovx+iqlPp2iw87wItjFDUf8JO44G+gs3wmCbJ
MxJ/gmJXzPmQJNo37T5HQ1aAOUgile7GX2SiZBOHz
SCcQ4CAQbZUOcfNR132pSPccem1rMHu/Fy4j2YHE
X8caXc3mLwRuP1VXtOntUpLL6xiQsT11s/JpLNX34
==I6rS

# FIG. 7

710 —— Version Number: 2

720 —— Serial Number:    D71C5791

730 —— Digital Signature Algorithm Identifier: MD5 for Message Digest

740 —— Certification Authority (CA) Country: US
        CA Locality: Redwood City, California
        CA Organization: RSA Data Security Inc.
        CA Organizational Unit: Commercial Certification Authority

750 —— Valid From:  Sep 22, 1995
        Valid Until: Nov 21, 1995

760 —— User Country:  US
        User Locality:  Mountain View, California
        User Organization:  Netscape Communications Corp.
        User Organizational Unit:  Test CA
        User Name:  John Smith

770 —— User Public Key:   mQCNAjDGJjsAAAEEAKNw18dbVmXsiOeUDjo
                          JxK4CouRWG3QX1950RoAPqYW2cgok1kV37RRfa7pn6V
                          Z1ZiDtIwQFAen2c2kDJ47fz/OpTMGZj7Gm70190mgGriq
                          FG3gja1mW9IKIZkn/MIINLWWzcUzat9qj8dnE2wC8rbv1
                          qH2sPj2ntMq/mPnOkahLAAURtAtKL1EuIFB1YmxpY7Qa
                          RnJhbmsgV2V5ZXI8ZnJhbmtAbW1OLmVkdT4==enyp

780 —— Other Data
        User E-Mail:  John.Smith@school.edu
        User Date of Birth: Jul 4, 1948

790 —— CA Signature:      iQCVAgUBMMZA1sq/mPnOkahLAQFNAwP/VgrV8d
                          wiSRwqovx+iq1Pp2iw87wItjFDUf8JO44G+gs3wmCbJMxJ/gm
                          JXzPmQJNo37T5HQ1aAOUgile7GX2SiZBOHzSCcQ4CAQbZ
                          UOcfNR132pSPccem1rMHu/Fy4j2YHEX8caXc3mLwRuP1V
                          XtOntUpLL6xiQsT11s/JpLNX34==I6rS

*800*

| | |
|---|---|
| VERSION NUMBER | 810 |
| DIGITAL SIGNATURE ALGORITHM IDENTIFIER | 830 |
| USER NAME | 865 |
| USER PUBLIC KEY | 870 |
| USER ID (URL) | 880 |
| CA SIGNATURE | 890 |

*FIG. 8*

*FIG. 11*

RECEIVER RECEIVES SIGNED ELECTRONIC DOCUMENT — 1101

↓

RECEIVER OBTAINS DIGITAL CERTIFICATE OF SENDER — 1102

↓

RECEIVER VERIFIES DIGITAL CERTIFICATE OF SENDER — 1103

↓

RECEIVER VERIFIES RECEIVED ELECTRONIC DOCUMENT — 1104

↓

RECEIVER OBTAINS CERTIFICATION INFORMATION OF SENDER — 1105

↓

RECEIVER VERIFIES PERIOD OF VALIDITY — 1106

# FIG. 9

910 —— Version Number:  2

930 —— Digital Signature Algorithm Identifier: MD5 for Message Digest

965 —— User Name:  John Smith

970 —— User Public Key:      mQCNAjDGJjsAAAEEAKNw18dbVmXsiOeUDjo
                             JxK4CouRWG3QX195ORoAPqYW2cgok1kV37RRf
                             a7pn6VZ1ZiDtIwQFAen2c2kDJ47fz/OpTMGZj7G
                             m70190mgGriqFG3gja1mW9IKIZkn/MIINLWWzc
                             Uzat9qj8dnE2wC8rbvlqH2sPj2ntMq/mPnOkahLAA
                             URtAtKL1EuIFB1YmxpY7QaRnJhbmsgV2V5ZXI8
                             ZnJhbm10AbW1OLmVkdT4==enyp

980 —— User ID:  HTTPS://SWWW.ARCANVS.COM/CERTS/D71C5791

990 —— CA Signature:        iQCVAgUBMMZA1sq/mPnOkahLAQFNAwP/VgrV8d
                             wiSRwqovx+iqlPp2iw87wItjFDUf8JO44G+gs3wmCbJ
                             MxJ/gmJXzPmQJNo37T5HQ1aAOUgile7GX2SiZBOHz
                             SCcQ4CAQbZUOcfNR132pSPccem1rMHu/Fy4j2YHE
                             X8caXc3mLwRuP1VXtOntUpLL6xiQsTlls/JpLNX34
                             ==16rS

*FIG. 10*

USER OBTAINS CERTIFICATE APPLICATION FORM — 1001

↓

USER DIGITALLY SIGNS CERTIFICATE APPLICATION FORM IN PRESENCE OF NOTARY — 1002

↓

NOTARY VERIFIES USER ID AND DIGITALLY SIGNS CERTIFICATE APPLICATION FORM — 1003

↓

USER ENCRYPTS NOTARIZED APPLICATION WITH CERTIFICATION AUTHORITY PUBLIC KEY — 1004

↓

USER SENDS ENCRYPTED APPLICATION TO CERTIFICATION AUTHORITY — 1005

↓

CERTIFICATION AUTHORITY VERIFIES CERTIFICATE APPLICATION INFORMATION — 1006

↓

CERTIFICATION AUTHORITY GENERATES UNIQUE ID AND BUILDS CERTIFICATE — 1007

↓

CERTIFICATION AUTHORITY APPENDS CERTIFICATION AUTHORITY DIGITAL SIGNATURE TO CERTIFICATE — 1008

↓

CERTIFICATION AUTHORITY FORWARDS COMPLETED CERTIFICATE TO USER — 1009

↓

CERTIFICATION AUTHORITY PUBLISHED CERTIFICATION IN REPOSITORY — 1010